# EUROPEAN PATENT SPECIFICATION

(11) **EP 0 732 358 B1**
(45) Date of publication and mention of the grant of the patent: **04.07.2001**
(21) Application number: 96101921.3
(22) Date of filing: 09.02.1996
(51) Int. Cl.: C08K 3/22, C08L 101/02

(54) **Light-coloured urea resin-based thermosetting moulding powder or mass and relative laser-markable products**
Gering gefärbtes wärmehärtendes Giess-Pulver auf Harnstoffharz-Basis oder Masse und lasermarkierbare Produkte
Poudre ou masse de moulage à base de résine d'urée thermo-durcissable légèrement colorée, et produits dérivés marquables au laser

(30) Priority: 14.03.1995 IT MI950490
(43) Date of publication of application: 18.09.1996
(73) Proprietor: FINVIMAR INTERNATIONAL B.V., 1000 BL Amsterdam (NL)
(72) Inventor: Gusi, Piero Camillo, I-36063 Marostica (VI) (IT)
(74) Representative: Petruzziello, Aldo

(56) References cited:
- EP-A- 0 190 997
- DATABASE WPI Derwent Publications Ltd., London, GB; AN 95-101580 XP002006480 & JP-A-07 025 154 (SOMAR CORP) , 27 January 1995
- DATABASE WPI Derwent Publications Ltd., London, GB; AN 95-127963 XP002006481 & JP-A-07 052 536 (NIPPON KAYAKU KK) , 28 February 1995

## Description

The present invention relates to a thermosetting urea resin-based moulding mass or powder in a light colour (whites, ivories, light greys, light browns, etc.), consisting of a urea resin and a cellulose-based reinforcement appropriately modified to make it suitable for manufacturing products that can be marked by a laser method.

As is known, various methods are employed to reproduce writing, logos, trademarks and the like on moulded plastic products, for example for electrical use, such as cover plates and similar articles.

A first method consists in engraving the die so that the resulting marking is engraved or embossed. This method makes it necessary to have various interchangeable dies or die parts (punches, inserts, etc.) in order to be able to change the markings that are to be obtained on the products.

A second method consists in transferring films through pressure with simultaneous application of heat (hot stamping). This method requires long cycle times to obtain an aesthetically satisfactory marking result, and thus involves high costs.

A third method consists in transferring inks onto the surface of the product (silk-screen printing, pad printing, etc.). This method involves problems of scratch, abrasion and friction resistance of the markings. Inks have difficulty in attaching to the surface of many plastic materials. The resistance and duration of what is reproduced on the product depend upon many factors that are difficult to control in mass production. They also depend upon the different resistance of the inks to solvents.

Another method, within which the present invention falls, is laser technology etching: a laser beam guided by an electronic system that has recorded what is to be marked on the product, strikes the surface of the product itself, modifying its structure through burning or similar methods, thus making the marking appear chromatically different from the colour of the product, etched into and forming part of the structure of the product without inserts of additional material.

This method compares favourably with the other methods mentioned above due to the following characteristics:
- legibility of what is reproduced;
- indelibility of what is reproduced,
- consistent quality of the etching made with laser marking,
- absence of added substances (dyes, inks, films and solvents),
- flexibility and set-up times are clearly advantageous in economic terms.

The laser method is currently used for marking products in thermoplastic materials, which contain relatively large percentages of laser-reactive substances added not in order to make marking possible but to make the material, and consequently the product, opaque and of the desired colour.

The laser method applied to light-coloured thermosetting resins (whites, ivories, light greys, light browns and all the other light colour shades) gives negative or extremely poor results even when long laser beam application times and high powers are employed. At best the effect obtained is an uneven marking with low contrast.

The aim of the invention is to provide a thermosetting moulding mass or powder, consisting of a urea resin and a cellulose-based reinforcement, that makes it possible to apply the laser technique to products obtained with the above moulding mass or powder in whites, ivories, light greys, light browns and all other light colours, so as to obtain clear, evenly etched markings with a good contrast using short laser beam application times.

This aim is achieved, according to the invention, by adding to the light coloured urea resin-based thermosetting moulding mass or powder, titanium dioxide in a percentage higher than 1.5% in weight, and preferably from 2% to 5%.

In fact research has surprisingly shown that increasing the percentage of titanium dioxide (which is normally present as a percentage of up to 1% of the weight of urea resin-based based moulding masses or powders to give the material its light colour: whites, ivories, light greys, light browns and any other light shades of colours) is the ideal solution for a result equivalent to that achieved on thermoplastic resins.

Surprisingly, it has also been noted that, contrary to any technical prejudices, the increase in the percentage of titanium dioxide added to the urea resin-based moulding mass or powder considerably improves the characteristics of the marking, while only minimally affecting the colour of the product with an imperceptible difference in shade.

In particular, marking tests have been carried out on samples made with an ivory-white coloured urea resin-based thermosetting moulding mass or powder with different percentages of titanium dioxide added, and the results are shown schematically in the attached figures, in which:

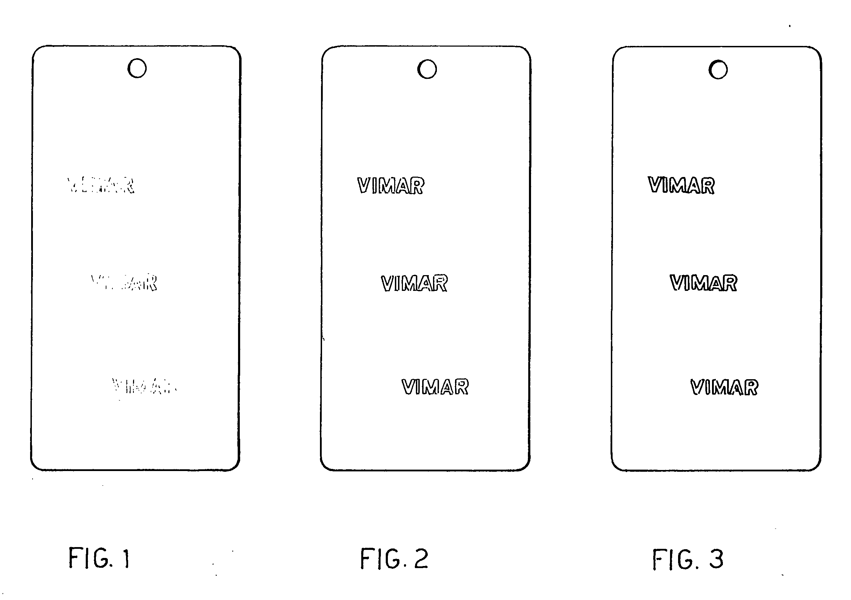

Figure 1 shows the result of laser marking carried out on a plate obtained from a conventional thermosetting urea resin-based mass or powder, containing 0.8% in weight of titanium dioxide;
Figure 2 shows the result of marking on a plate obtained from a thermosetting urea resin-based mass or powder containing 3% in weight of titanium dioxide;
Figure 3 shows the result of marking on a plate in the same material containing 4% in weight of titanium dioxide.

As can be easily observed on analysing the attached figures, the outcome of laser marking improves noticeably as the percentage of titanium dioxide added to the thermosetting urea resin-based moulding mass or powder increases. On the other hand, the colour of the product remains substantially unchanged.

A thermosetting mass or powder used to produce laser markable products according to the invention normally comprises, for example, about 70% of urea resin and the remaining 30% of cellulose.

## Claims

1. A light-coloured thermosetting moulding mass or powder, comprising a urea resin and a cellulose-based reinforcement, with titanium dioxide added, characterised by the fact that the titanium dioxide is present in a percentage in weight greater than 1.5%.

2. A moulding mass or powder according to claim 1, characterised in that titanium dioxide is present therein in percentages in weight ranging from 2% to 5%.

3. Use of a moulding mass or powder according to claim 1 or 2, to manufacture products that are particularly suitable for laser marking.

4. A product obtained by moulding a thermosetting mass or powder, comprising a urea resin and a cellulose-based reinforcement, with titanium dioxide added in a percentage in weight greater than 1.5%.

5. A product according to claim 1, characterised in that the amount of titanium dioxide added ranges from 2% to 5%.

6. A product according to claim 4 or 5, particularly suitable for marking with a laser method.

## Patentansprüche

1. Wärmehärtende Formmasse oder -Pulver in heller Farbe, die ein harnstoffhaltiges Harz und eine Verstärkung auf Zellulosebasis umfaßt und einen Titandioxydzusatz enthält, dadurch gekennzeichnet, daß das Titandioxyd in einem Prozentsatz an Gewicht vorhanden ist, der 1,5% überschreitet.

2. Formmasse oder -Pulver nach Anspruch 1, dadurch gekennzeichnet, daß das Titandioxyd darin in Prozentsätzen an Gewicht vorhanden ist, die zwischen 2% und 5% schwanken.

3. Verwendung einer Formmasse oder eines -Pulvers nach Anspruch 1 oder 2 für die Herstellung von Fabrikaten, die besonders für die Markierung mit Lasertechnik geeignet sind.

4. Ein durch Formen einer wärmehärtenden Masse oder Pulvers erzieltes Fabrikat, das ein harnstoffhaltiges Harz und eine Verstärkung auf Zellulosebasis enthält, welches mit einem Zusatz von Titandioxyd in einem Prozentsatz von über 1,5% versehen ist.

5. Fabrikat nach Anspruch 1, dadurch gekennzeichnet, daß die Menge an Titandioxydzusatz zwischen 2% und 5% schwankt.

6. Fabrikat nach Anspruch 4 oder 5, besonders geeignet für die Markierung mit Lasertechnik.

## Revendications

1. Masse ou poudre de moulage thermodurcissable de couleur clair, comprenant une résine urée et un renfort à base de cellulose, additivée de bioxyde de titane, caractérisée par le fait que le bioxyde de titane est présent en pourcentage en poids supérieur à 1,5 %.

2. Masse ou poudre de moulage selon la revendication 1, caractérisée par le fait que le bioxyde de titane est présent dans celle-ci en pourcentages en poids variables de 2 % à 5%.

3. Utilisation d'une masse ou d'une poudre de moulage selon la revendication 1 ou 2 pour fabriquer des produits qui sont particulièrement adaptés pour le marquage avec la technique laser.

4. Produit obtenu par moulage d'une masse ou d'une poudre thermodurcissable, comprenant une résine urée et un renfort à base de cellulose, additivée de bioxyde de titane en pourcentage en poids supérieur à 1,5 %.

5. Produit selon la revendication 1, caractérisé par le fait que la quantité de bioxyde de titane additivée varie entre 2 % et 5 %.

6. Produit selon la revendication 4 ou 5, particulièrement adapté pour le marquage avec la technique laser.
